# EUROPEAN PATENT APPLICATION

(11) **EP 0 699 724 A1**
(43) Date of publication of application: **06.03.1996**
(21) Application number: 94202492.8
(22) Date of filing: 31.08.1994
(51) Int. Cl.: C09D 133/06, C08F 8/40, B05D 5/08

(54) **Use of an aqueous resin composition in the preparation of can coatings**

(71) Applicant: DSM N.V., NL-6411 TE Heerlen (NL)
(72) Inventor: Pons, Dick Adriaan, NL-8015 CD Zwolle (NL); Van Hout, Johannes Barend, NL-8131 ST Wijhe (NL); Keijzer, Frederik, NL-8084 XB 't Harde (NL)

(57) **Abstract**

The invention relates to the use of an aqueous hybride dispersion in the preparation of can coatings.

The hybrid dispersion comprises a polymer based on (C₁-C₁₂) alkyl[meth]acrylate, a phosphorous containing compound and an organic unsaturated mono and/or dicarboxylic acid, a compound containing epoxy groups and an amino resin.

## Description

The invention relates to the use of an aqueous resin composition in the preparation of can coatings.

As elucidated in "Organic Coatings for beer, beverage and food metal containers" by P.J. Palackdharry (pages 277-278 of Polymeric Materials Science and Engineering, Volume 65, Fall Meeting 1991, New York) there are many types of metal containers. They include two- and three-piece beer and beverage cans, two- and three-piece food cans, aerosol cans, open and closed head steel drums, and pails. Metal substrates for these containers include aluminium, tin plate, and other pre-treated steels. Each type of container has its own coating requirements, determined by the can design, the coating application process and the product to be packaged.

Organic coatings used to package food products in metal containers must inherently possess certain key physical characteristics, application properties, and film performance requirements. The fundamental function of the inside coatings on cans and ends is to protect the packed product to maintain its nutritional value, texture, color and flavor when purchased and used by the consumer. To meet these requirements, the organic film must be free of any material which might extract into the packed product and must maintain its integrity over the product recommended shelf life. The ingredients in the can must not make contact with the metal surface.

A critical property of can lacquer is its ability to withstand the processing conditions employed in the canning operation. The most stringent of these are sterilization and pasteurisation resistance test.

It is the object of the present invention to provide substantially solvent free resin compositions which can be used in the preparation of can coatings. These can coatings, particularly internal lacquers, have to satisfy stringent performance requirements with regard to flexibility and chemical resistance. The manufacture of 3-piece cans from precoated flat sheet demands a high level of film flexibility but also, for 2- or 3-piece cans, it is important that the lacquer does not crack under accidental stress, e.g. dropping a can on the floor, thereby causing possible contamination of the contents by contact with bare metal. A high degree of chemical resistance is necessary, not only to ensure that no deterioration of the contents occurs on storage but also to withstand the sterilisation (for foodstuffs) and pasteurisation (for beverages) conditions which cans are subjected after filling and sealing.

The invention is characterized in that the substantially solvent free resin composition is a hybrid dispersion comprising:
I. a polymer based on
   a. (C₁-C₁₂) alkyl (meth)acrylate, (C₁-C₁₂) dialkylitaconate, (C₁-C₁₂) dialkylfumarate and/or (C₁-C₁₂) dialkylmaleate,
   b. a phosphorus-containing compound according to one of the formulas (RO)₂PO(OH) and/or (RO)PO(OH)₂, where R represents an alcohol residue derived from an unsaturated polymerizable alcohol with (2-12) carbon atoms or where R represents an AB group, where A is an acid residue derived from an unsaturated polymerizable carboxylic acid with 3-25 carbon atoms from the group formed by acrylic acid, methacrylic acid, crotonic acid, monoesterified fumaric acid, monoesterified maleic acid and monoesterified itaconic acid and where B represents a bivalent residue derived from a diol and/or a phosphorus-containing compound according to the formula (RO)(TO)PO(OH), where R represents an alcohol residue derived from an unsaturated polymerizable alcohol with (2-12) carbon atoms or where R represents an AB group where A is an acid residue derived from an unsaturated polymerizable carboxylic acid with (3-25) carbon atoms and B represents a bivalent residue derived from a diol, and where TO represents a residue derived from a branched or non-branched aliphatic alcohol with (6-22) carbon atoms or from a polyoxyalkylated alkylphenol with (7-30) carbon atoms or from an addition product of ethylene oxide to an alcohol with (6-22) carbon atoms or from an addition product of an alkylene oxide containing at least 3 carbon atoms to an alcohol with (1-15) carbon atoms or a phosphorous-containing compound containing phosphoric acid monomer units and
   c. organic unsaturated mono and/or dicarboxylic acid and
II. a compound containing epoxy groups and
III. an amino resin or a phenolic resin.

This substantially solvent free resin composition results in can coatings having a very good behaviour with respect to sterilization and pasteurization resistance and coatings having a very good flexibility.

In general, the polymer is based on 15-98% (wt) of component a), 1,0-10% (wt) of component b) and 0,1-20% (wt) of component c), (a + b + c being 100% (wt).

Preferably polymer (I) is based on
a. (C₁-C₁₂) alkyl (meth)acrylate, (C₁-C₁₂) dialkylitaconate, (C₁-C₁₂) dialkylfumarate and/or (C₁-C₁₂) dialkylmaleate,
b. a phosphorus-containing compound according to one of the formulas (RO)₂PO(OH) and/or (RO)PO(OH)₂, where R represents an alcohol residue derived from an unsaturated polymerizable alcohol with (2-12) carbon atoms or where R represents an AB group, where A is an acid residue derived from an unsaturated polymerizable carboxylic acid with 3-25 carbon atoms from the group formed by acrylic acid, methacrylic acid, crotonic acid, monoesterified fumaric acid, monoesterified maleic acid and monoesterified itaconic acid and where B represents a bivalent residue derived from a diol and/or a phosphorus-containing compound according to the formula (RO)(TO)PO(OH), where R represents an alcohol residue derived from an unsaturated polymerizable alcohol with (2-12) carbon atoms or where R represents an AB group where A is an acid residue derived from an unsaturated polymerizable carboxylic acid with (3-25) carbon atoms and B represents a bivalent residue derived from a diol, and where TO represents a residue derived from a branched or non-branched aliphatic alcohol with (6-22) carbon atoms or from a polyoxyalkylated alkylphenol with (7-30) carbon atoms or from an addition product of ethylene oxide to an alcohol with (6-22) carbon atoms or from an addition product of an alkylene oxide containing at least 3 carbon atoms to an alcohol with (1-15) carbon atoms or a phosphorous-containing compound containing phosphoric acid monomer units and
c. organic unsaturated mono and/or dicarboxylic acid and
d. a vinyl monomer
More preferably polymer (I) is based on:
a. 15-98% (wt) (C₁-C₁₂) alkyl (meth)acrylate, (C₁-C₁₂) dialkylitaconate, (C₁-C₁₂) dialkylfumarate or (C₁-C₁₂) dialkylmaleate,
b. 1,0-10%(wt) phosphorus-containing compound according to one of the formulas (RO)₂PO(OH) and/or (RO)PO(OH)₂, where R represents an alcohol residue derived from an unsaturated polymerizable alcohol with (2-12) carbon atoms or where R represents an AB group, where A is an acid residue derived from an unsaturated polymerizable carboxylic acid with (3-25) carbon atoms from the group formed by acrylic acid, methacrylic acid, crotonic acid, monoesterified fumaric acid, monoesterified maleic acid and monoesterified itaconic acid and where B represents a bivalent residue derived from a diol and/or a phosphorus-containing compound according to the formula (RO)(TO)PO(OH), where R represents an alcohol residue derived from an unsaturated polymerizable alcohol with (2-12) carbon atoms or where R represents an AB group where A is an acid residue derived from an unsaturated polymerizable carboxylic acid with (3-25) carbon atoms and B represents a bivalent residue derived from a diol, and where TO represents a residue derived from a branched or non-branched aliphatic alcohol with (6-22) carbon atoms or from a polyoxyalkylated alkylphenol with (7-30) carbon atoms or from an addition product of ethylene oxide to an alcohol with (6-22) carbon atoms or from an addition product of an alkylene oxide containing at least 3 carbon atoms to an alcohol with 1-15 carbon atoms and
c. 0,1-20% (wt) organic unsaturated mono and/or dicarboxylic acid and
d. 0,1-60% (wt) vinyl monomer.
   (a, b, c and d being 100% (wt.) together)
Polymer (I) can additionally be based on functional monomer units such as for example methoxypolyethylene glycolmethacrylate, methylolacrylamide, alkoxyacrylamide, acrylamide and glycidylmethacrylate in amounts less than 15% by weight.

Component (a) is preferably (C₁-C₁₂) alkyl (meth)acrylate.

(C₁-C₁₂) alkyl (meth)acrylate is preferably butyl (meth)acrylate. Other suitable (C₁-C₁₂) alkyl (meth)acrylates include, for instance, ethyl(meth)acrylate, methyl(meth)acrylate and 2-ethyl-hexyl(meth)acrylate.

Phosphorous-containing compounds used as component b) are described and can be obtained according to the process described in US-A-4110285 or US-A-4101490, the disclosures of which are incorporated herein by reference.

The organic unsaturated mono and/or dicarboxylic acid c) is preferably (meth)acrylic acid. According to a preferred embodiment of the invention, the percentage by weight of organic unsaturated mono or dicarboxylic acid is between 1 and 15%(wt), more preferably between 5 and 10% (wt).

Suitable vinyl monomers include, for instance, a vinylaromatic monomer, vinylversatate, vinyllaurate or vinylcaprate. Preference is given to the use of a vinylaromatic monomer such as styrene. Other suitable vinylaromatic monomers include, for instance, vinyltoluene and α-methylstyrene.

The compound containing epoxy groups is preferably a polymer or an oligomer having at least 2 epoxy groups per mole. The compound containing epoxy groups may, for instance, be chosen from epoxidized oils, polyglycidyl ethers, polyglycidyl esters, epoxy resins on the basis of bisphenol-A glycidyl ethers and/or polycycloaliphatic epoxy compounds.

Preferably, component III is an amino resin.

Suitable amino resins include benzoguanimine resins, melamine resins and/or urea-formaldehyde resins.

Preferably benzoguanamine is used.

The weight ratio I:(II + III) may range between 90:10 and 50:50 and is preferably between 85:15 and 70:30.

The weight ratio between the compound containing epoxy groups and the amino resin may range between 1:5 and 2:1 and is preferably between 1:4 and 1:2.

The hybrid dispersion according to the invention can be produced by a generally known emulsion polymerisation method from the monomer mixture I, the component II and the resin III. Suitable emulsion polymerisation methods are, for example, disclosed in EP-A-69582, EP-A-176192, EP-A-356592 and WO 83/00151, the disclosures of which are incorporated herein by reference.

During the preparation of the dispersion catalysts, emulsifiers and other additives can be added in art-recognized amounts.

The composition according to the invention may contain the normal known ingredients known to a man skilled in the art such as for example pigments, thickeners, wetting agents and dispersion agents in art-recognized quantities. If desired also other resins such as for example waterbased phenolic resins, crosslinkers, catalysts and antifoaming agents can be added. The composition can also contain small amounts, for example between 0,1 and 3% by weight relative to solid resin, of a solvent such as, for example, butyl glycol.

The coatings can be cured at 170°C-230°C for 5-20 minutes in for example an oven.

The composition can also be applied in, for example, foil coating applications.

In the examples below, several tests were used.

The sterilization resistance test evaluates the resistance of coatings that are intended for direct food contact. The coatings are exposed to standard solutions and temperatures that simulate real practice conditions of filled containers.

The apparatus consists of an autoclave.

Suitable reagents include demi-water, 2% lactic acid in demi-water, 2% citric acid in demi-water, or 2% acetic acid in demi-water.

The standard condition for the sterilization procedure is: 1 hour, 129°C, 1.8 bar.

A basket with test material is placed in an autoclave and filled partly with demi-water, so that the test items are dipped half in the water. When using acid solutions (mentioned at reagents), the autoclave should not be filled (directly) with these solutions. In this case the coated flat panels (4.4 cm * 11.0 cm) should be placed in a glass jar (370 ml). The jar is filled with the acid solution, so that the test items are half dipped in the solution (level is ± 5 cm). Next the glass jar is carefully closed with aluminium foil and the glass jar is placed in autoclave. Then, the autoclave is filled with demi-water till same level as acid solutions and the lid of the autoclave is closed.

After sterilization one hour the pressure is removed, then the basket and panels are removed and the panels are wiped dry.

The porosity test with a Kuhnke Enamel rates MK 4-6.3-10 detects pores and haircracks in coatings. The amount of electrical current flowing is inverted related to the insulating capacity of a coating. The more pores the more current is flowing.

The visual inspection on coating defects, directly after sterilization inspects on blushing (stains), blisters, difference in colouring between liquid and vapour phase, softening and adhesion.

The flexibility was determined visually after punching and sterilization of a 'DSM Resins standard can'.

In addition, the flexibility is measured according to the so-called 'wedge-bend test'. In this test a 'DSM Resins standard can' is conically deformed by means of an impact, after which the number of defective millimeters of the coating is determined (with a magnifier; magnification 8x). This determination takes place after immersion in a copper sulphate/hydrochloric acid solution. The aim is to obtain the lowest possible values.

The invention is further explained by the following examples without, however, being limited thereto.

### Examples I-II and Comparative Examples A-D

### Process for the preparation of an dispersion

Demineralised water was added to a flask of 2 liters. At 80°C 0,2% by weight (relative to monomers) amoniumpersulfate was added.

During 3 hours a preemulsion (see Table I) is added at a reaction temperature of 80°C. The reaction was continued during 2 hours. After the addition of a preemulsion an initiator was added during 1 hour in an amount of 0,05% by weight (relative to monomers). Next the product was cooled and screened (90 µm). The physical characteristics were determined.

**TABLE I**

| | I | II | A | B | C | D |
|---|---|---|---|---|---|---|
| water | 300 | 300 | 300 | 300 | 300 | 300 |

| initiator: | | | | | | |
|---|---|---|---|---|---|---|
| ammoniumpersulphate | 1,6 | 1,6 | 1,6 | 1,6 | 1,6 | 1,6 |
| demineralised water | 14,4 | 14,4 | 14,4 | 14,4 | 14,4 | 14,4 |

| preemulsion: | | | | | | |
|---|---|---|---|---|---|---|
| water | 720 | 720 | 720 | 720 | 720 | 720 |
| dodecylbezene sulphonic acid | - | 16 | - | - | - | - |
| NP10EO sulphate-Na-acid 35%¹⁾ | 22 | 22 | 22 | 22 | 66 | 22 |
| HEMA-P₂O₅-adduct²⁾ | 32 | 32 | 32 | - | - | 32 |
| methacrylic acid | 80 | 80 | - | 80 | 80 | 80 |
| styrene | 110 | 110 | 190 | 110 | 110 | 210 |
| butylacrylate | 410 | 410 | 410 | 410 | 410 | 510 |
| epoxyresin³⁾ | 50 | 50 | 50 | 50 | 50 | - |
| aminoresin⁴⁾ | 150 | 150 | 150 | 150 | 150 | - |
| dimethylethanol amine | 8 | 12 | 8 | - | - | 8 |

| initiator: | | | | | | |
|---|---|---|---|---|---|---|
| ammoniumpersulphate | 0,4 | 0,4 | 0,4 | 0,4 | 0,4 | 0,4 |
| demineralised water | 3,6 | 3,6 | 3,6 | 3,6 | 3,6 | 3,6 |

| | | | | | | |
|---|---|---|---|---|---|---|
| ¹⁾ = product from Servo Delden Holland | | | | | | |
| ²⁾ = mono-di-phosphate ester of hydroxymetyl(meth)acrylate | | | | | | |
| ³⁾ = Epikote 828® (Shell) | | | | | | |
| ⁴⁾ = Cymel 1123® (Dyno) | | | | | | |

The hybride emulsion was applied on a tinplate and cured during 10 minutes at 210°C.

The results of the tests are summarized in Table II.

**TABLE II**

| Hybrid | I | II | A | B | C | D |
|---|---|---|---|---|---|---|
| layer thickness (µm) | 6 | 6 | 6 | 6 | 6 | 6 |

| Sterilization resistance¹⁾ | | | | | | |
|---|---|---|---|---|---|---|
| water | 5 | 5 | 3 | 4 | 3 | 3 |
| 2% lactic acid | 4 | 3 | 1 | 2 | 1 | 2 |
| 2% acetic acid | 5 | 5 | 2 | 2 | 2 | 3 |
| 2% citric acid | 5 | 4 | 2 | 2 | 2 | 3 |
| MEK resistance (rubs) | >100 | 60 | <10 | 90 | 80 | >100 |
| Porosity Kuhnke²⁾ before/after sterilization | <1/2 | <1/2 | very high | 1/3 | 1/3 | <1/2 |
| Flexibility¹⁾ DSM-cup before/after sterilization | 5/4 | 5/4 | 5/- | 5/4 | 5/4 | 3/1 |
| Wedgebend (%) | 90 | 90 | 100 | 95 | 95 | 70 |

| | | | | | | |
|---|---|---|---|---|---|---|
| ¹⁾ With respect to the sterilization resistance and the flexibility: 5 = excellent 4 = good 3 = moderate 2 = unsufficient and 1 = poor | | | | | | |
| ²⁾ With respect to the porosity test the values have to be as low as possible | | | | | | |

The resin compositions according to the invention result in coatings having a good combination of sterilization resistance and flexibility.

## Claims

1. Use of an aqueous resin composition in the preparation of can coatings characterized in that the substantially solvent free resin composition is a hybrid dispersion comprising:
I. a polymer based on
a. (C₁-C₁₂) alkyl (meth)acrylate, (C₁-C₁₂) dialkylitaconate, (C₁-C₁₂) dialkylfumarate and/or (C₁-C₁₂) dialkylmaleate,
b. a phosphorus-containing compound according to one of the formulas (RO)₂PO(OH) and/or (RO)PO(OH)₂, where R represents an alcohol residue derived from an unsaturated polymerizable alcohol with (2-12) carbon atoms or where R represents an AB group, where A is an acid residue derived from an unsaturated polymerizable carboxylic acid with 3-25 carbon atoms from the group formed by acrylic acid, methacrylic acid, crotonic acid, monoesterified fumaric acid, monoesterified maleic acid and monoesterified itaconic acid and where B represents a bivalent residue derived from a diol and/or a phosphorus-containing compound according to the formula (RO)(TO)PO(OH), where R represents an alcohol residue derived from an unsaturated polymerizable alcohol with (2-12) carbon atoms or where R represents an AB group where A is an acid residue derived from an unsaturated polymerizable carboxylic acid with (3-25) carbon atoms and B represents a bivalent residue derived from a diol, and where TO represents a residue derived from a branched or non-branched aliphatic alcohol with (6-22) carbon atoms or from a polyoxyalkylated alkylphenol with (7-30) carbon atoms or from an addition product of ethylene oxide to an alcohol with (6-22) carbon atoms or from an addition product of an alkylene oxide containing at least 3 carbon atoms to an alcohol with (1-15) carbon atoms or a phosphorous-containing compound containing phosphoric acid monomer units and
c. organic unsaturated mono and/or dicarboxylic acid and
II. a compound containing epoxy groups and
III. an amino resin or a phenolic resin.

2. Use according to claim 1, characterized in that the polymer is based on
a. (C₁-C₁₂) alkyl (meth)acrylate, (C₁-C₁₂) dialkylitaconate, (C₁-C₁₂) dialkylfumarate and/or (C₁-C₁₂) dialkylmaleate,
b. the phosphorus-containing compound,
c. organic unsaturated mono and/or dicarboxylic acid and
d. a vinyl monomer.

3. Use according to any one of claims 1-2, characterized in that the polymer is based on
a. 15-98% (wt) (C₁-C₁₂) alkyl (meth)acrylate, (C₁-C₁₂) dialkylitaconate, (C₁-C₁₂) dialkylfumarate or (C₁-C₁₂) dialkylmaleate,
b. 1,0-10%(wt) of the phosphorus-containing compound,
c. 0,1-20% (wt) organic unsaturated mono and/or dicarboxylic acid and
d. 0,1-60% (wt) vinyl monomer.

4. Use according to any one of claims 1-3, characterized in that component b) is (C₁-C₁₂) alkyl(meth)acrylate, component c) is (meth)acrylic acid and component d) is a vinylaromatic monomer.

5. A can coating composition comprising an aqueous hybrid composition according to any one of claims 1-4 and additives.

6. A can coated with a composition according to claim 5.

7. A process for the preparation of a can coating characterized in that the composition according to claim 5 is cured at a temperature between 170°C and 230°C during 5 and 20 minutes.
